# EUROPEAN PATENT APPLICATION

(11) **EP 2 431 005 A1**
(43) Date of publication of application: **21.03.2012**
(21) Application number: 11386014.2
(22) Date of filing: 16.09.2011
(51) Int. Cl.: A61C 7/12

(54) **Orthodontic bracket**

(30) Priority: 20.09.2010 US 886234; 28.12.2010 US 979810
(71) Applicant: Kyritsis, George, Quebec H7P 1T6 (CA)
(72) Inventor: Kyritsis, George, Quebec H7P 1T6 (CA)
(74) Representative: Mikrou, Xanthippe

(57) **Abstract**

A low profile orthodontic bracket with arcwire slot (23). The slot (23) has a height (d1) between .0190 and .020 inches and a depth (d2) less than .026 inches, with a preferred embodiment being a height of .0195 inches and a depth of .025 inches. The slot is preferably rectangular in cross-sectional shape thus having equal length short sides and preferably equal length long sides (25),(26), the long sides having straight, uninterrupted walls. The orthodontic appliance may be in the form of a bracket or tube, each for receiving a .019 x .025 inch archwire and each shaped for one or more upper or lower permanent teeth. The appliances may be universal, thus being of a same size on all applicable teeth or may be a bi-dimensional setup, which uses conventional .018 or .022 inch slotted brackets in combination with the slotted bracket having a height between and not including .0190 and .020 inches.

## Description

### BACKGROUND OF THE INVENTION

### Field of the Invention

The present invention relates to an orthodontic appliance, such as a bracket or tube, being of low profile and for seating a .019 inch x .025 inch archwire.

### Description of the Related Art

Any discussion of the related art throughout the specification should in no way be considered as an admission that such related art is widely known or forms part of common general knowledge in the field.

Orthodontic appliances, such as tubes and/or brackets have been in use for years. For simplification purposes, the appliances will herein be referred to as "brackets". Generally, the brackets are bonded, via different adhesives, etc., to the teeth and in conjunction with archwires and other auxiliaries are utilized to move the teeth along the three planes of space. Archwires are secured in slots of the brackets, wherein the slots generally have a rectangular cross-section and are called edgewise slots (it is appreciated that other types of openings suitable for receiving archwires may be used).

The two most popular slots currently used have either a cross-sectional size of .018 inches x .025 inches or a cross-sectional size of .022 inches x .028 inches. Accordingly, these brackets are known respectively as 18-slot edgewise brackets and 22-slot edgewise brackets. A third popular option "bi-dimensional appliance" is to use both edgewise slots in the same dental arch, such as for example 18-slot edgewise brackets on the anterior teeth and 22-slot edgewise brackets on the posterior teeth.

Generally, with 18-slot edgewise brackets it is common to almost completely fill the slot with steel rectangular archwires. Good torque expression, excellent control of tooth movement, and light orthodontic forces are provided with the 18-slot edgewise brackets. With 22-slot edgewise brackets, it is difficult to completely fill the slots because of the larger sized .020, .021, and .022 inch archwires being very stiff and producing heavier orthodontic forces. The heavier orthodontic forces may be damaging to the roots of the teeth as well as painful to patients. Therefore, undersized steel archwires such as 019 x .025 inch archwires are most often used to finish cases in the 22-slot edgewise brackets resulting in some loss of control.

On the other hand, using undersized archwires in edgewise brackets is a way to reduce friction if teeth are to slide along the archwire which is an important consideration in situations where space closure is required. As a practical matter, sliding teeth along an archwire requires about .002 inches of clearance. When sliding mechanics are necessary, larger cross-sectional archwires, such as .018 inch x .022 inch wires, .019 x .019 inch archwires, .019 x .025 inch archwires are superior to .016 inch x .022 inch archwires because the former are stronger and therefore do not distort as easily.

The 18-slot edgewise brackets and the .018 inch archwires generally fit too tightly for sliding to occur, wherein too much friction would be produced hampering efficient space closure. A bi-dimensional appliance is one that uses 18-slot edgewise brackets on the anterior teeth and 22-slot edgewise brackets on the posterior teeth. The archwire typically used to retract the incisors has a cross-sectional size of .018 inches x .022 inches. The archwire completely fills the slots of the incisor brackets providing good control of the bucco-lingual inclination of the anterior teeth during their retraction. At the same time, the .018 inch x .022 inch archwire is undersized in the posterior brackets allowing low friction and easy sliding of the wire along these brackets. The main drawback of the bi-dimensional technique is hat the thickness of the archwire that can be utilized is limited to a cross-sectional size of .018 inches x .022 inches. This limitation exists because the maximum size of the archwire is dictated by the anterior brackets which have a slot height of .018 inches. Consequently, the undersized archwire cannot control the bucco--lingual inclination of the posterior teeth which are bonded with 22-slot edgewise brackets.

Another commonly used archwire has a cross-sectional size of .019 inches x .025 inches and may be comprised of stainless steel or titanium alloy. Because of the size of the .019 inch archwire, the archwire generally has too much play when inserted within a 22-slot edgewise bracket, thus resulting in loss of control and will not fit within an 18-slot edgewise bracket. Similarly, the 19-slot edgewise bracket, such as disclosed in Wool (U.S. Patent Publication No. 2009-0061376) cannot be used to hold a square or rectangular .019 archwire because there has to exist some play between the archwire and the bracket.

Applicant has determined that the amount of play needed between a rectangular .019 inch archwire and the bracket is generally estimated to be a minimum of .0002 inches and preferably .0005 inches to allow for the archwire to be maneuvered to be simultaneously engaged within the slots of two or more brackets using clinically acceptable force levels, wherein engaging four or more brackets may be improbable or impossible in a clinical setting without the specified clearance. In addition, a 20-slot edgewise bracket would provide too much play for efficient control of the bucco-lingual inclination of the anterior and posterior teeth. To summarize, a 19-slot edgewise bracket is too tight to practically seat a square or rectangular .019 inch archwire and a 20-slot edgewise bracket is too loose to precisely interact with a .019 inch square or rectangular archwire.

The fact that the 19-slot edgewise bracket cannot seat a rectangular .019 inch archwire is further emphasized by the omission of a .019 inch archwire from Wool. Wool only seems to be concerned with the depth of the slot of the bracket, so as to provide ample room for the groove to receive the retaining clip. The groove in Wool is not without detriments, where Wool excludes the possibility of providing a compact bracket having a slot depth of .025 inches. Some reasons for providing an anterior bracket with a small profile (.025 inch depth or less) is patient comfort, better hygiene and better esthetics. Incorporating the groove in the bracket body at .026 inches would tend to increase dramatically the profile of the bracket. The final depth of Wool's bracket slot would probably be in the range of .040 to .050 inches. In addition, grooves tend to accumulate plaque and tartar more easily which may affect the integrity and the smoothness of the archwire slot which in turn may impede sliding of the wire through the bracket. Having solid uninterrupted walls defining the slot eliminates the possibility of smaller sized archwires becoming entrapped in the groove or the corners of larger archwires lodging in the groove, wherein solid walls may provide for a more efficient "conduit" with less friction. Another advantage of having a low profile bracket is that it reduces lip irritation for patients and there is less chance of the bracket becoming dislodged from the tooth during mastication because the shear forces on the bracket body are reduced if the profile is small.

Over the years, there have been many attempts to solve the cited problems of the 18-slot edgewise brackets, 19-slot edgewise bracket, and the 22-slot edgewise brackets, such as differential archwires, multi-slotted brackets, and the bi-dimensional technique. However, all of these techniques decreased versatility or limited the choice of archwires that an orthodontist can use during treatment. When using brackets having multiple edgewise slots, the brackets tend to be bulky, which in turn render the brackets un-aesthetic and uncomfortable for the patients and not very practical for the operator. Because of the inherent problems with the related art, there is a need for a low profile orthodontic appliance for seating a .019 inch x .025 inch archwire.

The invention generally relates to an orthodontic appliance which includes a height between and generally not including .0190 and .020 inches and having a depth less than .026 inches, with a preferred embodiment being a height of .0195 inches and a depth of .025 inches. The slot is preferably rectangular in cross-sectional shape thus having equal length short sides and preferably equal length long sides, the long sides having straight, uninterrupted walls. The orthodontic appliance may be in the form of a bracket or tube, each for receiving a .019 x .025 inch archwire and each shaped for one or more upper or lower permanent teeth. The appliances may be universal, thus being of a same size on all applicable teeth or may be a bi-dimensional setup, which uses conventional .018 or .022 inch slotted brackets in combination with the slotted bracket having a height between and not including .0190 and .020 inches.

There has thus been outlined, rather broadly, some of the features of the invention in order that the detailed description thereof may be better understood, and in order that the present contribution to the art may be better appreciated. There are additional features of the invention that will be described hereinafter and that will form the subject matter of the claims appended hereto. In this respect, before explaining at least one embodiment of the invention in detail, it is to be understood that the invention is not limited in its application to the details of construction or to the arrangements of the components set forth in the following description or illustrated in the drawings. The invention is capable of other embodiments and of being practiced and carried out in various ways. Also, it is to be understood that the phraseology and terminology employed herein are for the purpose of the description and should not be regarded as limiting.

Various other objects, features and attendant advantages of the present invention will become fully appreciated as the same becomes better understood when considered in conjunction with the accompanying drawings, in which like reference characters designate the same or similar parts throughout the several views, and wherein:
FIG. 1 is a side view of the exemplary orthodontic appliance.
FIG. 2 is a plan view of a first embodiment of universal appliances upon a set of permanent teeth.
FIG. 3 is a plan view of a first embodiment of the bi-dimensional appliances upon a set of permanent teeth.
FIG. 4 is a plan view of a second embodiment of the bi-dimensional appliances upon a set of permanent teeth.
FIG. 5 is a diagram illustrating the twisting force of the orthodontic appliance as applied to an upper anterior incisor.
FIG. 6 is a side view of an alternate embodiment of the orthodontic appliance having unequal length long sides.

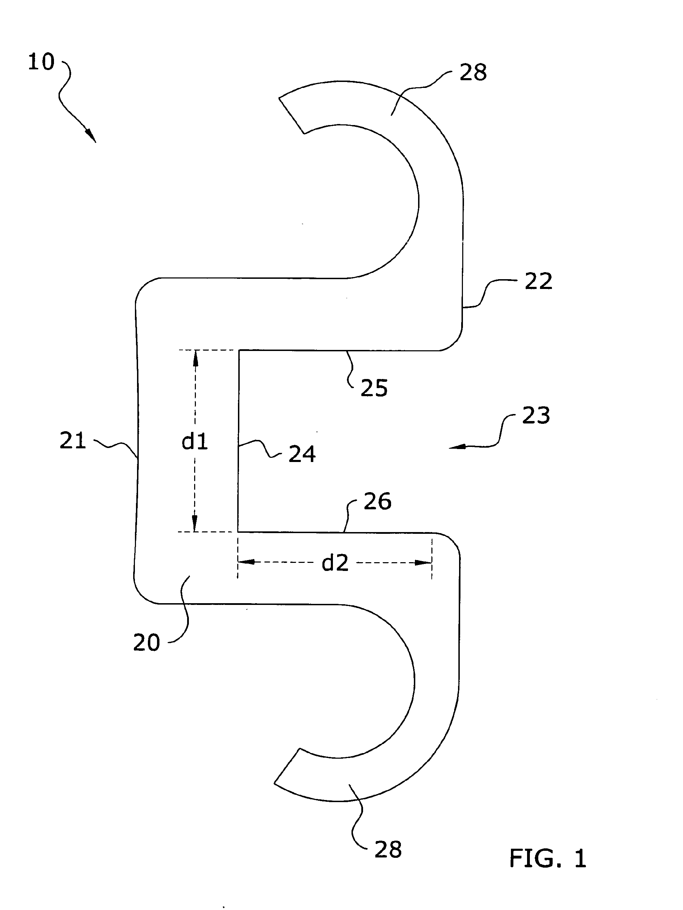

Turning now descriptively to the drawings, in which similar reference characters denote similar elements throughout the several views, FIGS. 1 through 6 illustrate an orthodontic appliance **10,** which comprises an edgewise slot **23** with a height between and not including .019 and .020 inches (illustrated as **d1** in Figure 1) and having a depth less than .026 inches (illustrated as **d2** in Figure 1), with a preferred embodiment being a height of .0195 inches and a depth of .025 inches. The slot **23** is preferably rectangular in cross-sectional shape thus generally having equal length short sides **24** and equal length long sides **25, 26.** The orthodontic appliance **10** may be in the form of a bracket or tube, each for receiving an archwire **30** for aligning and orienting one or more upper or lower permanent teeth.

A bi-dimensional orthodontic appliance **10** is also disclosed which uses conventional .018 or .022 inch slotted brackets **50, 52** in combination with the slotted bracket **10** having a height between .019 and .020 inches. The appliance **10** may also be used as a universal appliance. Between .019 inches and .020 inches as related to the size of the slot **23** is defined herein as any size between and not including .019 inches and .020 inches, such as .0191 inches to .0199 inches. It is appreciated that in an alternate embodiment, the present invention may employ a .0189 inch height slot **23,** such as when using a .018 inch height archwire **30.**

As stated the appliance **10** may be in the form of a conventional orthodontic bracket or tube and the edgewise slot **23** may be a non edgewise slot, such as a hole or opening, or various other shapes and structures. The appliance **10** may be comprised of a translucent material, such as porcelain or plastic, or may be comprised of a metal alloy, such as stainless steel or aluminum. The embodiment illustrated in Figure 1 is simply exemplary and is not meant to limit or restrict the present invention to a particular structure. Various well-known structures common to orthodontics may be utilized each of which has the novel opening or edgewise slot **23** having a height between .019 and .020 inches and having a depth less than .026 inches.

Figure 1 illustrates an exemplary orthodontic appliance **10** having a base portion **20** with a rear surface **21** and a front surface **22.** The rear surface **21** is adhered directly or via a base pad (not shown) to the tooth **40** generally via an adhesive substance upon the lingual surface **44** or labial surface **45** of the tooth **40.** Extending from the base portion **20** is one or more sets of pairs of wings **28** each having the edgewise slot **23** formed therebetween and extending within the front surface **22** of the base portion **20.** It is appreciated that multiple sets of wings **28** and multiple edgewise slots **23** may be used with the appliance **10** conventional to orthodontic brackets and tubes. The preferably stainless steel archwire **30** is positioned within the slot **23** and retained therein, such as by a resilient band fastener **32** secured by the wings **28.** Other locking or self-locking mechanisms to secure the archwire **30** within the slot **23** may be utilized.

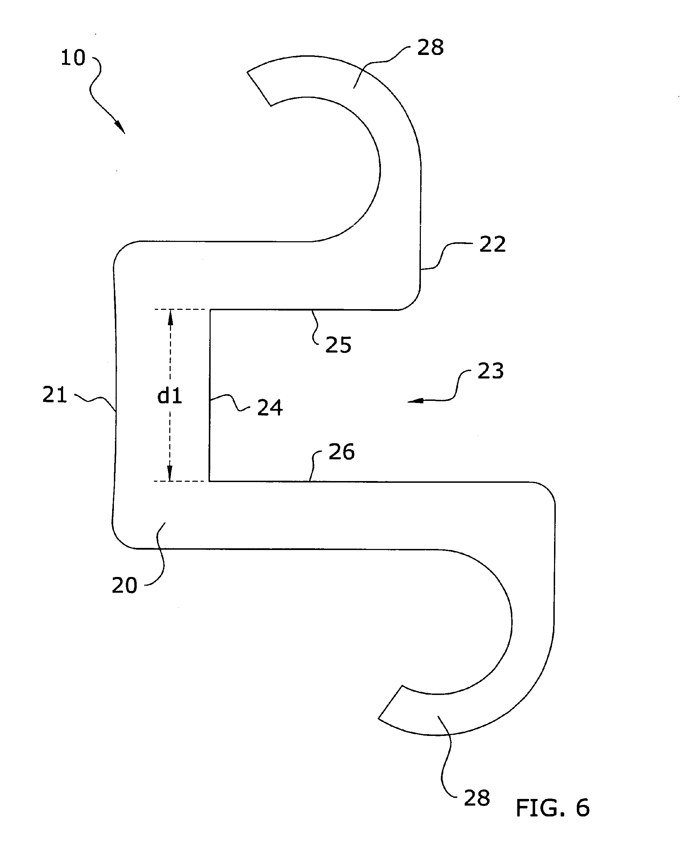

In the preferred embodiment, the edgewise slot **23** is comprised of a rectangular cross-sectional shape generally having two short, straight sides **24,** and two long, straight sides **25, 26.** The short sides **24** (one being the opening to the slot **23**) are comprised of equal lengths and the long sides **25, 26** are comprised of equal lengths. However, it is not necessary to limit the long sides **25, 26** to being equal in length as illustrated in Figure 6, wherein uneven lengths may provide for an active self-ligating appliance. The long sides **25, 26** are preferably straight and uninterrupted in structure (thus having no groove) to form a rectangular profile with the short side **24** and the opening to the slot **23.** The uninterrupted sidewalls **25, 26** are important to reduce friction between the bracket and archwire and to maintain a low profile (minimize depth) appliance **10** thus limiting the depth of the appliance **10** to be unobtrusive and cause less irritation to the patient's soft tissues.

The short side **24** is between and not including .019 and .020 inches in length and generally comprising the height of the slot **23** in relation to the position of the appliance **10** relative the tooth and the long sides **25, 26** are less than .026 inches in length and generally comprising the depth of the slot **23** in relation to the position of the appliance **10** relative the tooth. A preferred exact size for the slot **23** may include .0195 inches (height) x .025 inches (depth). The height of the short side **24** may be varied from .0192 inches to .0199 inches in alternate embodiments. The slot **23** preferably accommodates an archwire **30** having a height of .019 inches and a depth of .025 inches. A slight amount of play is generally needed between the slot **23** and the archwire **30** for the archwire **30** to be maneuvered to be simultaneously engaged within the slots **23** of two or more appliances **10.** The amount of play (space between the top or bottom of the archwire **30** and the top or bottom of the slot **23** is generally estimated to be a minimum of .0002 inches and preferably .0005 inches. Thus, the height of the short side **24** must generally be greater than .019 inches to fully seat a .019 x .025 inch archwire in multiple brackets and is preferably .0195 inches.

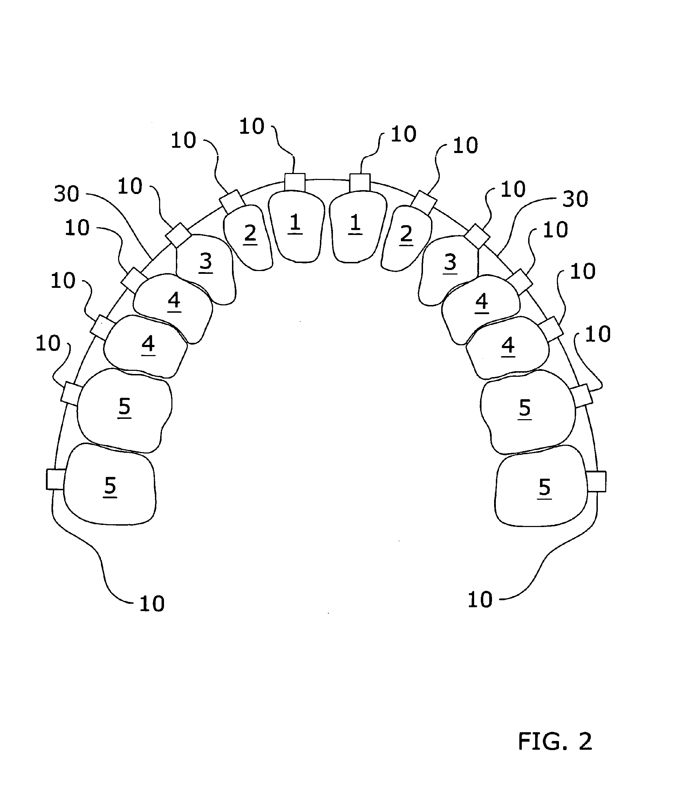

The greater than .019 inch (height) slot **23** can be used universally on all of the teeth or partially to construct various bi-dimensional appliances **10.** Figure 2 illustrates a set of permanent teeth using a universal appliance **10** (appliance being the same size on each tooth). When using a universal appliance **10,** the height of the slot **23** being greater than .019 inches (to accommodate a .019 inch height archwire **30**) is especially necessary just to insert the archwire **30** within the slot **23** of the multiple appliances **10.**

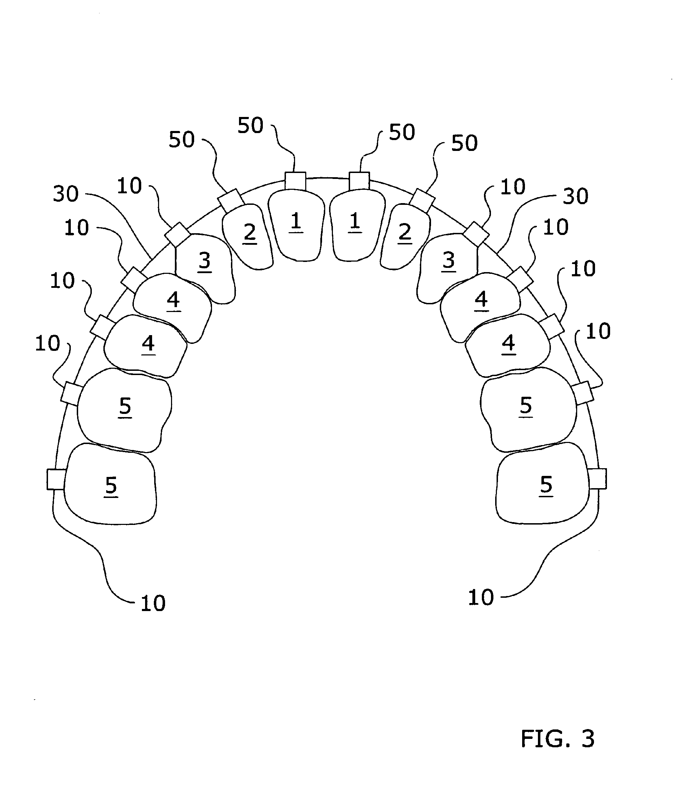

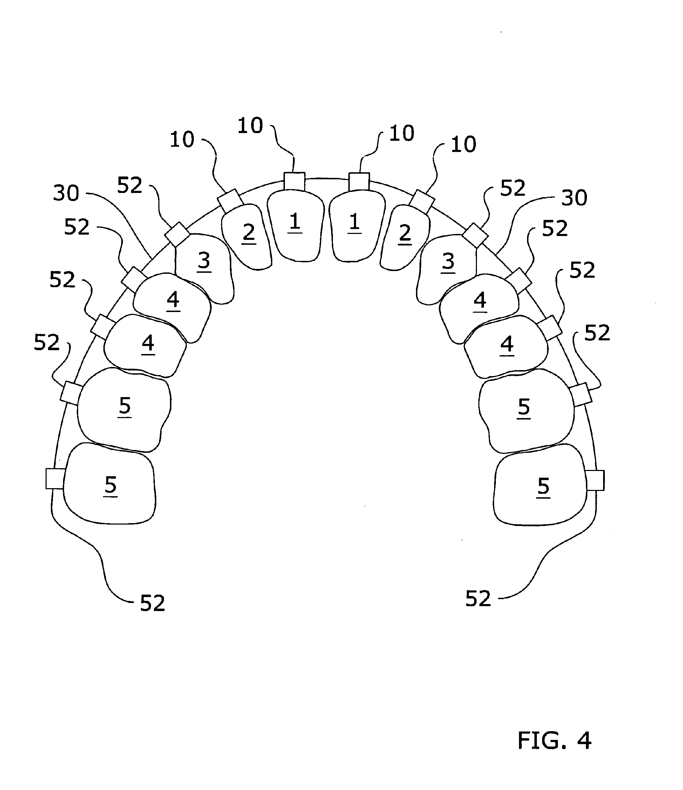

Figures 3 and 4 illustrate a set of permanent teeth including central incisors **1,** lateral incisors **2,** canines **3,** premolars **4,** and molars **5.** A plurality of first orthodontic appliances **50, 52** may be located on a first group of the permanent teeth, wherein the plurality of first orthodontic appliances **50, 52** each have a first edgewise slot (not shown), the first edgewise slot having a height of either .018 inches or .022 inches, and a plurality of second orthodontic appliances **10** may be located on a second group of the permanent teeth, the plurality of second orthodontic appliances **10** each having a second edgewise slot **23,** the second edgewise slot **23** having a height ranging between and not including .019 inches to .020 inches. The archwire **30** connects the first edgewise slots of the plurality of first orthodontic appliances **50, 52** to the second edgewise slots **23** of the plurality of second orthodontic appliances **10.**

A first example of the bi-dimensional appliances **10** is illustrated in Figure 3, wherein the first group of teeth includes central and lateral incisors **1, 2** and wherein said second group of teeth includes canines **3,** premolars **4,** and molars **5.** The first edgewise slots each have a height of .018 inches and wherein said second edgewise slots **23** each have a height greater than .019 inches. The second edgewise slots **23** more particularly have a depth less than 0.26 inches.

A second example of the bi-dimensional appliances **10** is illustrated in Figure 4,wherein the first group of teeth includes canines **3,** premolars **4,** and molars **5** and wherein the second group of teeth includes central and lateral incisors **1, 2.** The first edgewise slots each have a height of .022 inches and wherein the second edgewise slots **23** each have a height greater than .019 inches. The second edgewise slots **23** more particularly have a depth of .025 inches or less than .026 inches. Other combinations of the appliance **10** and prior 18-slot and 22-slot edgewise brackets **50, 52** may be utilized as appreciated.

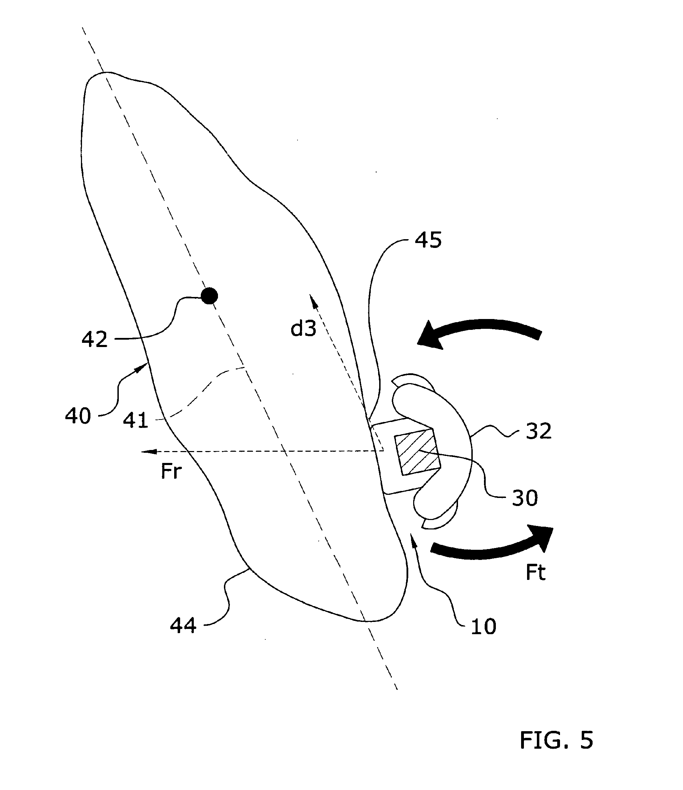

Figure 5 illustrates additional reasoning and benefits of the greater than .019 edgewise slot **23** of the appliance **10.** In particular, the size of the slot **23** of the appliance **10** allows for easier control of the bucco-lingual positions of the roots of the teeth in general. Consider the retraction of the upper anterior incisors, which is a standard procedure during orthodontic treatment. If a retraction force of 100 gm (illustrated by **Fr**) is applied 8 mm (illustrated by **d3**) away from the center of resistance **42** along the center lengthwise axis **41** of the tooth **40** to retract a central incisor **40,** a moment of 800 gm-mm would be needed to keep the tooth **40** from tipping.

Producing a moment of this magnitude within the confines of a .018 (.45 mm) inch edgewise slot would require a twisting force of 1778 gm-mm from the archwire. However, to produce a 800 gm-mm moment within the confines of a greater than .019 (.48 mm) edgewise slot **23** only 1667 gm-mm of twisting force (illustrated by **Ft**) would be required from the archwire **30.** In addition, the greater than .019 slot **23** allows larger wires **30** to be inserted when performing tooth retraction. The torsional resistance of a .019 inch x .025 inch archwire is greater than that of a .018 inch x .025 inch archwire. Accordingly, the torsional stiffness for a .018 inch x .025 inch stainless steel archwire is 185 gm-mm per degree and 273 gm-mm per degree for the .019 inch x .025 inch stainless steel archwire.

Using the formula Twist = Torque / Stiffness, a comparison between the .018 inch and greater than .019 inch slotted appliances can be made with respect to their effectiveness in retracting the incisor segment bodily. For the .018 inch slot, the amount of degrees the archwire must deflect to produce bodily movement is 10 degrees. (1778 gm-mm divided by 185 gm-mm per degrees.) For the greater than .019 inch slot, the amount of degrees the archwire must deflect to produce bodily movement is approximately 6 degrees. (1667 gm-mm divided by 273 gm-mm per degrees.)

Thus, clinically the difference is about 40% less tipping of the incisors with the greater than .019 slot vs. the conventional .018 slot. Additional increases in the height of the slot and the size of the wire to .020 or .022 inches to decrease tipping of the incisors during their retraction is neither practical or desirable, with the reason being that the increased stiffness of the archwire in vertical bending makes it too difficult to engage simultaneously the slots of two or more incisor brackets. The forces are very heavy causing pain to the patient and damage to the roots of the teeth.

Unless otherwise defined, all technical and scientific terms used herein have the same meaning as commonly understood by one of ordinary skill in the art to which this invention belongs. Although methods and materials similar to or equivalent to those described herein can be used in the practice or testing of the present invention, suitable methods and materials are described above. All publications, patent applications, patents, and other references mentioned herein are incorporated by reference in their entirety to the extent allowed by applicable law and regulations. In case of conflict, the present specification, including definitions, will control. The present invention may be embodied in other specific forms without departing from the spirit or essential attributes thereof, and it is therefore desired that the present embodiment be considered in all respects as illustrative and not restrictive. Any headings utilized within the description are for convenience only and have no legal or limiting effect.

## Claims

1. An orthodontic appliance for aligning teeth, comprising:
an edgewise slot adapted to receive an archwire, said edgewise slot having a height ranging between .019 inches and .020 inches.

2. The orthodontic appliance of Claim 1, consisting of a single said edgewise slot.

3. The orthodontic appliance of Claim 1, wherein said edgewise slot has a height ranging between and including .0191 inches and .0199 inches.

4. The orthodontic appliance of Claim 3, wherein said edgewise slot has a height of .0195 inches.

5. The orthodontic appliance of Claim 1, wherein said edgewise slot has a rectangular cross-sectional shape.

6. The orthodontic appliance of Claim 1, wherein said edgewise slot has straight, uninterrupted sidewalls.

7. The orthodontic appliance of Claim 1, wherein said edgewise slot has a depth of 025 inches.

8. The orthodontic appliance of Claim 1, wherein said edgewise slot has a height of .019 inches and a depth of .025 inches.

9. An orthodontic bracket for receiving an archwire to align teeth, comprising:
a base portion having a rear surface adjacent a tooth and front surface opposite thereof, said base portion having an edgewise slot extending within said front surface;
said edgewise slot having a rectangular cross-sectional shape with two short sides and two long sides, said two short sides being equal in length and said two short sides being between .019 inches and .020 inches in length, said two long sides are each comprised of a straight, uninterrupted structure; and
a pair of wing portions extending from said base portion for receiving a fastener to secure said archwire within said edgewise slot.

10. The orthodontic appliance of Claim 9, wherein said two long sides are equal in length.

11. The orthodontic appliance of Claim 9, wherein said two long sides are not equal in length.

12. The orthodontic appliance of Claim 9, wherein said edgewise slot has a height ranging between and including .0192 inches and .0195 inches.

13. The orthodontic appliance of Claim 12, wherein said edgewise slot has a height of .0195 inches.

14. The orthodontic appliance of Claim 13, wherein said edgewise slot has a depth of less than .026 inches.

15. The orthodontic appliance of Claim 9, wherein said edgewise slot has a height of .0191 inches and a depth of .025 inches.

16. The orthodontic appliance of Claim 9, wherein said rear surface is positioned on a lingual surface of said tooth.

17. The orthodontic appliance of Claim 9, wherein said rear surface is positioned on a labial surface of said tooth.

18. The orthodontic appliance of Claim 9, wherein said archwire has a height of .019 inches and a depth of .025 inches.

19. A universal orthodontic appliance system for aligning a set of upper permanent teeth or a set of lower permanent teeth, said universal orthodontic appliance system comprising:
a plurality of orthodontic appliances on said upper permanent teeth or said lower permanent teeth;
said plurality of orthodontic appliances each having an edgewise slot, said edgewise slot having a height of .0195 inches and a depth of less than .026 inches;
an archwire seated within each of said edgewise slots of said plurality of orthodontic appliances, wherein said archwire has a height of .019 inches and a depth of 025 inches;
and
a plurality of fasteners for securing said archwire within said edgewise slots of said plurality of orthodontic appliances.

20. The universal orthodontic appliance system of Claim 19, wherein said edgewise slots each have a depth of .025 inches.
